# EUROPÄISCHE PATENTSCHRIFT

(11) **EP 1 570 175 B1**
(45) Veröffentlichungstag und Bekanntmachung des Hinweises auf die Patenterteilung: **19.07.2006**
(21) Anmeldenummer: 03813105.8
(22) Anmeldetag: 04.12.2003
(51) Int. Cl.: F03B 11/04, F03B 3/02

(54) **VERFAHREN UND VORRICHTUNG ZUR REDUKTION VON DRUCKSCHWANKUNGEN IM SAUGROHR EINER WASSER-TURBINE ODER -PUMPE ODER -PUMPTURBINE**
METHOD AND DEVICE FOR REDUCING PRESSURE FLUCTUATIONS IN AN INDUCTION PIPE OF A WATER TURBINE OR WATER PUMP OR WATER-PUMP TURBINE
PROCEDE ET DISPOSITIF PERMETTANT DE REDUIRE DES FLUCTUATIONS DE PRESSION DANS LE TUBE D'ASPIRATION D'UNE TURBINE OU POMPE OU TURBINE-POMPE A EAU

(30) Priorität: 14.12.2002 DE 10258557
(43) Veröffentlichungstag der Anmeldung: 07.09.2005
(73) Patentinhaber: Voith Siemens Hydro Power Generation GmbH & Co. KG, 89522 Heidenheim (DE)
(72) Erfinder: FAIGLE, Peter, 89537 Giengen (DE); SCHERER, Thomas, 89522 Heidenheim (DE)
(74) Vertreter: Dr. Weitzel & Partner
(86) Internationale Anmeldenummer: PCT/EP2003/013664
(87) Internationale Veröffentlichungsnummer: WO 2004/055362

(56) Entgegenhaltungen:
- CH-A- 328 203
- FR-A- 1 162 872
- GB-A- 799 013
- US-A- 2 079 258
- GREIN H: "VIBRATION PHENOMENA IN FRANCIS TURBINES: THEIR CAUSES AND PREVENTION" ESCHER WYSS NEWS, ESCHER WYSS, ZURICH, CH, Bd. 54/55, Nr. 1, 1981, Seiten 37-42, XP008018462 ISSN: 0367-1402

## Beschreibung

Die Erfindung betrifft eine Turbine oder -Pumpe oder -Pumpturbine, insbesondere das Saugrohr einer solchen Turbine, das zur Ableitung des Wassers aus der Turbine in Richtung Unterwasser dient. Die Erfindung betrifft in erster Linie Francis-Maschinen. Es kommen aber auch Kaplan Turbinen in betracht.

An Wasserturbinen wie Francis-Turbinen werden zunehmend höhere Anforderungen hinsichtlich des Wirkungsgrades und des möglichst ausgedehnten Arbeitsbereiches gestellt. Wünschenswert ist ein variabler Einsatz hinsichtlich der Wasserdurchflußmenge vom extremen Teillastbetrieb bis hin zum Überlastbetrieb. In allen Lastbereichen soll ein möglichst hoher Wirkungsgrad bei gleichzeitig schwingungsfreiem Lauf der Turbine erreicht werden.

Francis-Turbinen werden an unterschiedliche Betriebsbedingungen durch die Verstellung der Leitschaufeln angepaßt. Dennoch treten insbesondere unter Teillast instationäre Strömungsverhältnisse auf, die zu starken Schwingungen an der Maschine führen. Materialschäden als Folge können insbesondere dann eintreten, wenn die Eigenfrequenzen von Bauteilen mit diesen Schwingungen übereinstimmen. Eine weitere negative Folge von Turbinenvibrationen sind vor allem für große Maschinen die Auswirkungen, die diese Schwingungen auf das Stromnetz haben. Gleichlaufunruhen werden über den Generator in das Stromnetz eingekoppelt und machen sich dort als Spannungsschwankungen unangenehm bemerkbar. Daraus ergeben sich nachteilige Einschränkungen des Turbinenbetriebsbereichs. So sind kritische Teillastbereiche beim Hochfahren der Turbine besonders schnell zu durchfahren und im Dauerbetrieb zu vermeiden. Außerdem findet eine unerwünschte gegenseitige Beeinflussung wasserführender Systeme statt.

Beim optimalen Betrieb einer Francis-Turbine strömt das Wasser aus der Einlaufspirale axial symmetrisch in das Laufrad, wird dort von den Leitschaufeln so umgelenkt, daß es axial in das Saugrohr einströmt und dort zum Unterwasser abgeleitet. Bei einem derart idealen Betrieb ist die Strömung im Saugrohr drallfrei. Bei Betriebszuständen der Turbine außerhalb des Bestpunktes ist diese Drallfreiheit der Abströmung nach dem Laufrad nicht mehr gegeben. Der ursächliche Zusammenhang zwischen der rotativen Komponente der Strömung im Saugrohr und den Maschinenschwingungen ist bekannt. Zur Stabilisierung der Strömung im Saugrohr und zur Unterdrückung des Dralls werden nach dem heutigen Stand der Technik Leitbleche entlang des Saugrohres eingebracht. Derartige Leitbleche können als Finnen ausgebildet sein, die in axialer Richtung orientiert sind. Diese Form führt zu einer Unterdrückung des Dralls im Saugrohr, die aber mit dem Nachteil eines verminderten Wirkungsgrades verbunden ist.

Zur Lösung dieses Problems wurden variable Leitbleche entwickelt, die entsprechend den Strömungsverhältnissen ein- und ausgefahren werden können. Weitere Bauformen von Leitblechen sind parallel zu den Wandflächen des Saugrohres orientiert und verhindern somit durch die Stabilisierung der Strömung zwischen Leitblech und Saugrohrwand ein Ablösen von Strömungsbereichen. Wie die zuvor genannten finnenartigen Strukturen verringert auch diese Konstruktion die Energieausbeute der Turbinen. Des weiteren erhöhen derartige statische oder variable Konstruktionen den Aufwand für die Herstellung und Wartung von Turbinen und sind daher ein kostenrelevanter Faktor.

Weitere Lösungsansätze zur Verringerung des Dralls und seiner Wirkung unter Teillastbedingungen sind das Zuführen von Luft oder Wasser in die instationäre Strömung. Bekannt sind Konstruktionsprinzipien, bei denen Luft in das Laufrad oder in das Saugrohr von den Saugrohrwänden oder der Achse des Laufrades aus eingeblasen werden.

Eine Weiterführung dieses Gedankens besteht darin, eine teils mit Wasser und Luft gefüllte Kammer um das Saugrohr zu legen, die durch Öffnungen in der Saugrohrwand in Kontakt zur Strömung im Saugrohr steht. Durch diese findet das Zu- und Abströmen von Luft und Wasser entsprechend der Druckverhältnisse in der Saugrohrströmung statt. Auch diese Lösung zur Drallkontrolle ist mit entsprechend konstruktivem Aufwand verbunden, da hier neben der zusätzlichen Druckkammer auch eine Regelung für den Luftdruck in der Umgebungskammer aufgebaut werden muß.

Grein H: "VIBRATION PHENOMENA IN FRANCIS TURBINES: THEIR CAUSES AND PREVENTION ESCHER WYSS NEWS, ESCHER WYSS, ZURICH, CH, Bd. 54/55, Nr. 1, 1981, Seiten 37 - 42, XP008018462 ISSN: 0367 - 1402 zeigt eine Francis-Turbine mit einem langgestreckten Verdrängungskörper im Saugrohr im Bereich der Nabe des Laufrades mit den Merkmalen, die im Oberbegriff des Anspruchs 1 zusammengefasst sind.

FR-A-1 162 872 offenbart einen zylindrischen Verdrängungskörper im Saugrohr einer Francis-Turbine.

Der Erfindung liegt die Aufgabe zugrunde, ein Saugrohr für eine Francis-Turbine anzugeben, das gegenüber dem Stand der Technik erhebliche Vorteile aufweist. Insbesondere soll das Saugrohr den Effekt von Druckschwankungen minimieren, wie sie aufgrund von drallbehafteter Strömung bei Teillastbedingungen auftreten. Diese Aufgabe wird durch ein Saugrohr von Anspruch 1 gelöst.

Die Erfinder haben erkannt, daß es beim Betrieb einer Francis-Turbine unter Teillast zur Ausbildung einer Rezirkulationszone hinter dem Laufrad kommt. Die Übergangsschicht zwischen diesem Bereich und der Hauptströmung ist gekennzeichnet durch starke Geschwindigkeitsgradienten. Hydrodynamische Instabilitäten vom Kelvin-Helmholtz-Typ führen zur Ausbildung von Wirbelzöpfen, die aufgrund der Gesamtrotation der Strömung eine rotative Komponente besitzen. Dieser rotierender Wirbelzopf führt zu einem rotierenden Druck, das im Bereich des Krümmers des Saugrohres eine Kraftwirkung in axialer Richtung verursacht und zu entsprechenden Druckschwankungen, die ebenfalls in axialer Richtung und damit in Richtung der Turbine wirken. Des weiteren ist es möglich, daß diese axiale Druckschwankungen, verbunden mit dem helikal geformten Wirbelzopf, zu Grenzschichtablösungen im Wandbereich des Krümmers führen, die den Effekt der in axialer Richtung wirkenden Druckschwankungen noch zusätzlich verstärken. Dies erklärt die Entstehung der Druckschwankungen im Saugrohr abhängig von der Rotationsfrequenz des Laufrades.

Eine weitere Komponente von stochastischen Druckschwankungen kann dadurch entstehen, daß durch den helikalen Wirbelzopf lokale Druckbereiche mit Drücken unter dem Dampfdruck entstehen, was zur Bildung von Kavitationsblasen führt. Beim Zerplatzen dieser Kavitationsblasen entstehen zusätzliche Spannungspulse.

Gemäß der Erfindung wird im Saugrohr ein langgestreckter Verdrängungskörper angeordnet. Dessen stromaufwärtiges Ende befindet sich im Bereich der Nabe des Laufrades.

Der Verdrängungskörper kann kegelförmig sein und erweitert sich in Strömungsrichtung erfindungsgemäß. Er ist derart angeordnet, dass seine Mantelfläche vom strömenden Wasser umgeben ist. Im Allgemeinen wird seine Längsachse mit der Längsachse des Saugrohres zusammenfallen.

Zahlreiche Varianten sind möglich. So kann der Verdrängungskörper eine Fortsetzung der Nabe des Laufrades sein und somit einteilig mit der Nabe. Er kann sich aber auch in einem minimalen Abstand an die Nabe anschließen. Der Abstand zwischen diesen beiden braucht nur wenige Millimeter zu sein, beispielsweise 1, 2, 3, 5 mm. Auch 10 bis 50 mm sind denkbar.

Eine weitere Lösung besteht darin, dass die Nabe in Strömungsrichtung gesehen länger gemacht wird, als üblich, beispielsweise das Doppelte oder Dreifache oder Fünffache, so dass sie einen Teil des Verdrängungskörpers bildet. Ein weiterer Teil folgt sodann in Strömungsrichtung. Dieser weitere Teil ist ein eigenständiges Bauteil, das somit nicht einteilig mit der verlängerten Nabe ist und daher auch nicht umläuft.

Handelt es sich bei dem Verdrängungskörper um ein von der Nabe gelöstes, selbständiges Bauteil, so muss dies natürlich innerhalb des Saugrohres fixiert werden. Ein solches Fixieren kann durch Stäbe erfolgen, die senkrecht zur Strömungsrichtung verlaufen und in der Wandung des Saugrohres befestigt sind. Die Stäbe können radial angeordnet sein.

Eine besonders interessante Lösung kann darin bestehen, dass das stromaufwärtige Ende des Verdrängungskörpers an der Nabe des Laufrades gelagert ist, so dass der Verdrängungskörper hierdurch zusätzlich lagestabilisiert wird.

Die Erfindung lässt sich sowohl bei geraden als auch bei gekrümmten Saugrohren anwenden. Bei gekrümmten Saugrohren ergibt sich eine zusätzliche Lagerungsmöglichkeit, indem der Verdrängungskörper im Krümmungsbereich am Saugrohr beziehungsweise an dessen Fundamentierung fixiert ist.

Nachfolgend sind die Erfindung sowie der Stand Technik anhand der Zeichnung näher erläutert. Es zeigen:
- Figur 1: eine Francisturbine in einem Axialschnitt
- Figur 2: numerische Strömungssimulation der Ausbildung eines Wirbelzopfes
- Figur 3: klassische Bauform des Saugrohrdiffusors
- Figur 3a und 3b: einen gekrümmten Saugrohrdiffusor mit einer ersten Ausführungsform eines Verdrängungskörpers
- Figur 4: einen gekrümmten Saugrohrdiffusor mit einer zweiten Ausführungsform des Verdrängungskörpers.

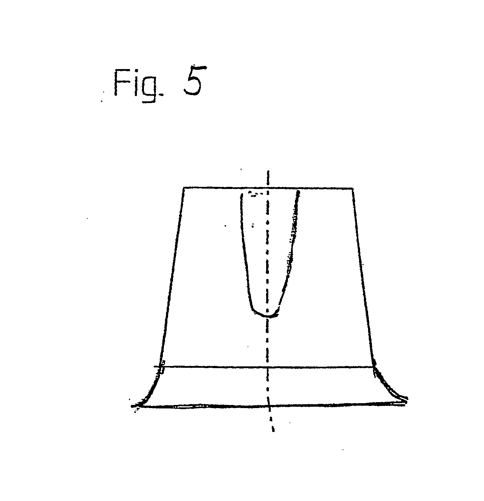

- Figur 5: einen geraden Saugrohrdiffusor mit einer weiteren Ausführungsform eines Verdrängungskörpers, der jedoch nicht erfindungsgemäß eine Erweiterung aufweist.

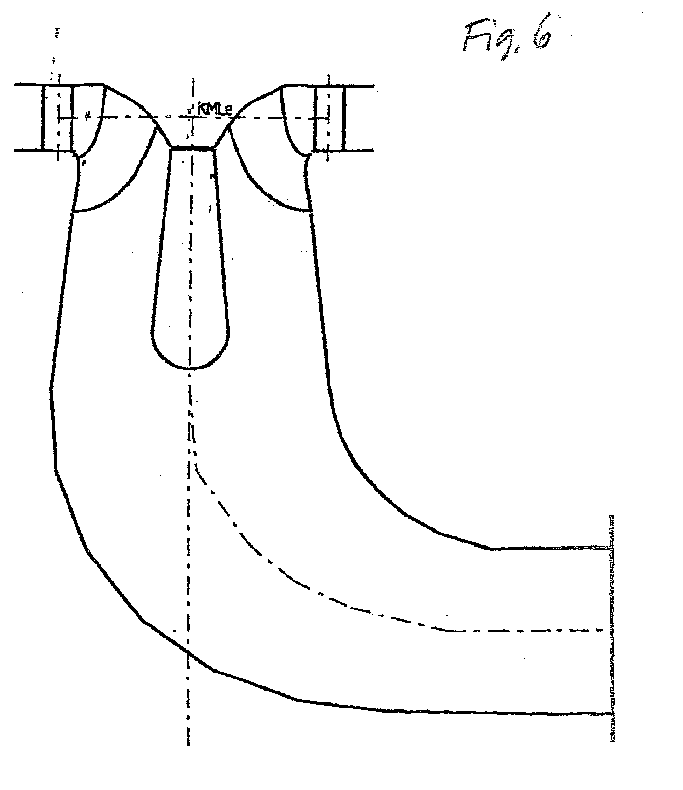

- Figur 6: einen gekrümmten Saugrohrdiffusor mit einem Verdrängungskörper ähnlich gemäß jenem gemäß der Figur 3a und 3b

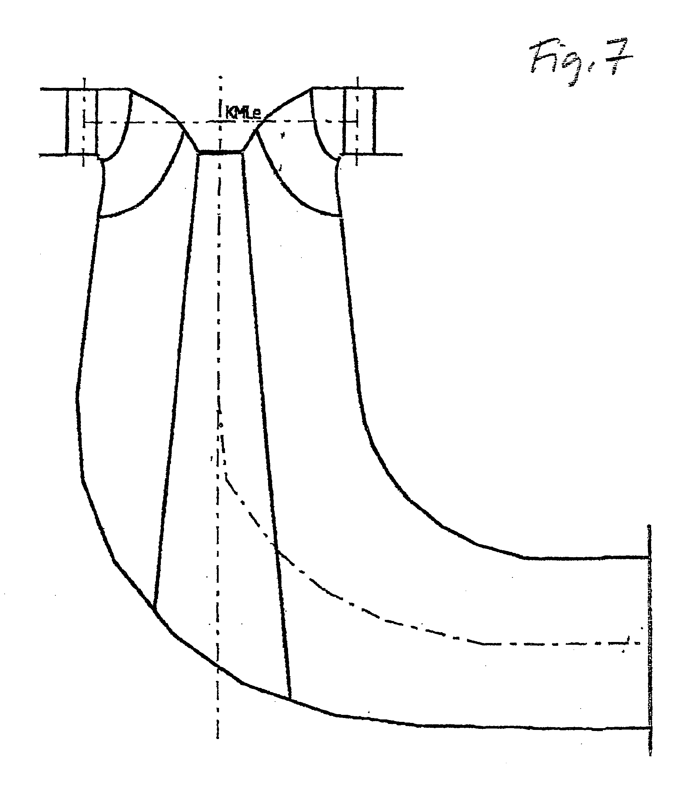

- Figur 7: einen gekrümmten Saugrohrdiffusor mit einem Verdrängungskörper ähnlich jenem gemäß der Figuren 4a und 4b

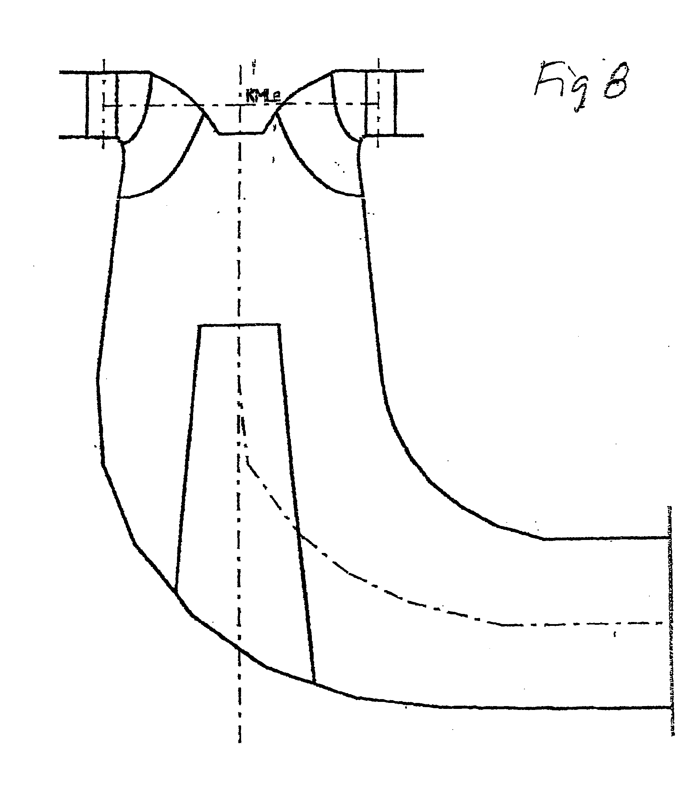

- Figur 8: einen gekrümmten Saugrohrdiffusor mit einem Verdrängungskörper, der nur am Saugrohrkrümmer fixiert ist

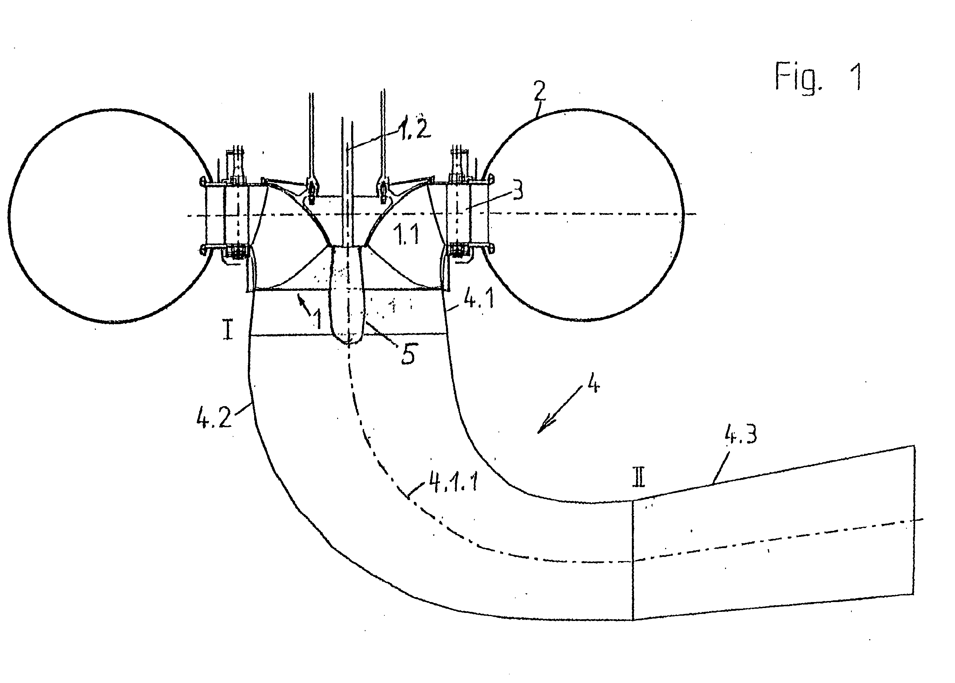

Die in Figur 1 gezeigte Francisturbine ist wie folgt aufgebaut:

Ein Laufrad 1 umfaßt eine Mehrzahl von Laufschaufeln 1.1. Es ist um eine Laufradachse 1.2 drehbar.

Das Laufrad 1 ist von einem Spiralgehäuse 2 umgeben. Dem Laufrad 1 ist ein Kranz von Leitschaufeln 3 vorgeschaltet.

Die Turbine weist ein Saugrohr 4 auf. Dieses umfaßt einen Eintrittsdiffusor 4.1 mit einer Achse 4.1.1, einen sich daran anschließenden Krümmer 4.2, und sich daran anschließenden Saugkasten 4.3. Siehe die ideelle Trennebene I zwischen Eintrittsdiffusor 4.1 und Krümmer 4.2, sowie die ideelle Trennebene II zwischen Krümmer 4.2 und Saugkasten 4.3.

Der Eintrittsdiffusor 4.1 kann bezüglich der Laufradachse 1.2 asymmetrisch gestaltet sein. Hierzu gibt es zahlreiche Möglichkeiten. So kann die Achse 4.1.1 des Eintrittsdiffusors 4.1 gegenüber der Laufradachse 1.1 versetzt sein. Die Achse 4.1.1 des Eintrittsdiffusors kann gekrümmt sein. Die Umfangswand des Eintrittsdiffusors 4.1 kann einseitig ausgebaucht sein, bezogen auf die Laufradachse 1.2. Der Querschnitt des Eintrittsdiffusors 4.1 kann unrund sein, beispielsweise elliptisch.

Man erkennt einen erfindungsgemäßen Verdrängungskörper 5. Dieser ist einteilig mit der Nabe des Laufrades 1. Er stellt gewissermaßen eine Verlängerung der Nabe in Strömungsrichtung dar. Er läuft somit zusammen mit dem Laufrad 1 um.

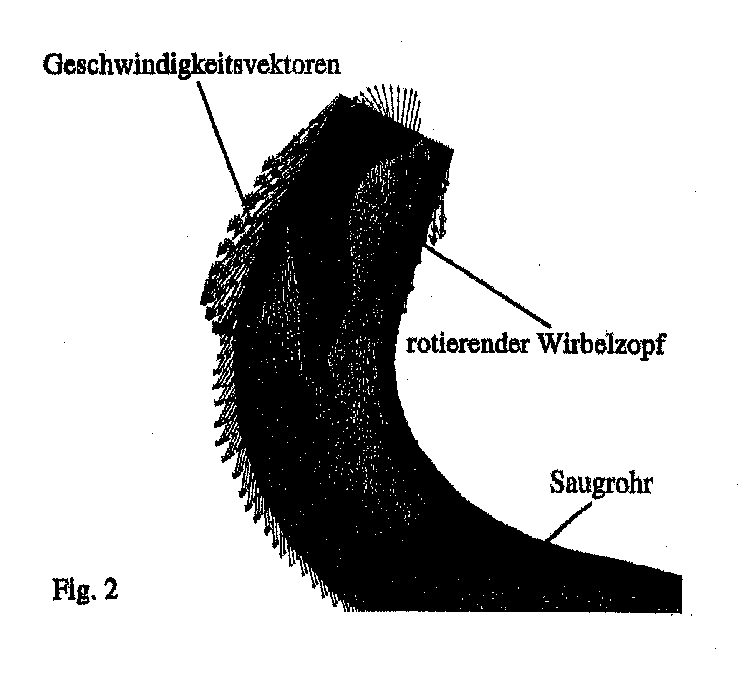

Figur 2 zeigt eine numerische Strömungssimulation im Arbeitsbereich der Teillast einer Francis-Turbine. Dargestellt ist die Geschwindigkeitsverteilung der Strömung im Saugrohr mit der Ausbildung eines helikalen Wirbelzopfes. Dieser löst sich im Bereich des Krümmers unter Dissipation von Energie auf. Bei diesem Prozeß entstehen aufgrund des rotierenden Druckfeldes des Wirbelzopfes Druckschwankungen, die sich in axialer Richtung bis zur Turbine hin fortsetzen. Dieser instationäre Strömungszustand ist die Ursache für die von der Rotationsfrequenz abhängigen Schwingungen auf der Turbine.

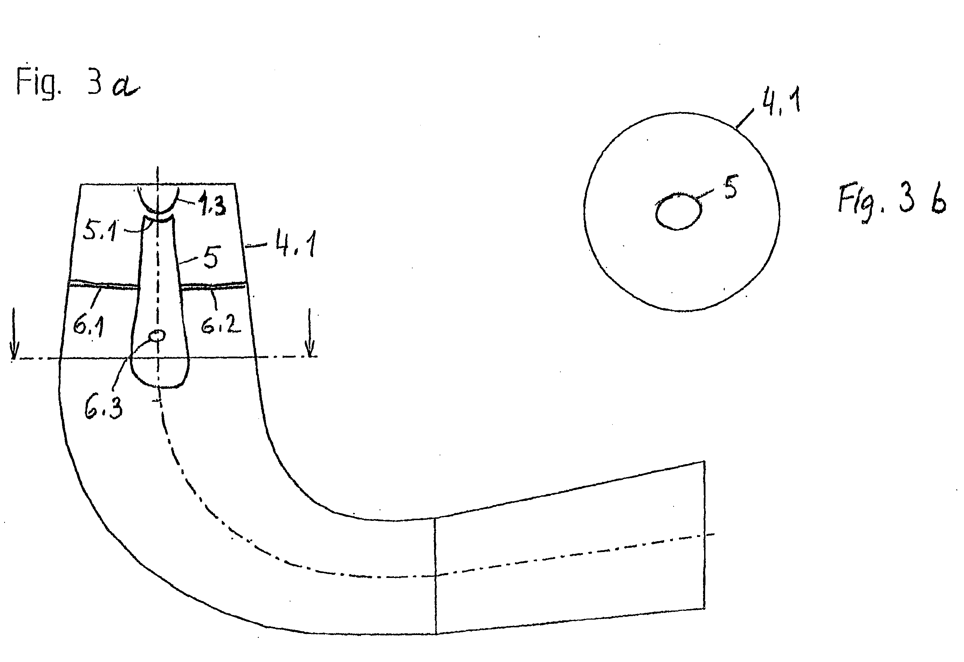

Die Figuren 3a und 3b stellen die Bauform des Saugrohroberteils des Diffusors in klassischer Bauart dar. Typisch ist die radial symmetrische Formgebung mit einem kreisförmigen Querschnitt einer geraden Diffusorachse, die in Übereinstimmung mit der Laufradachse geführt ist.

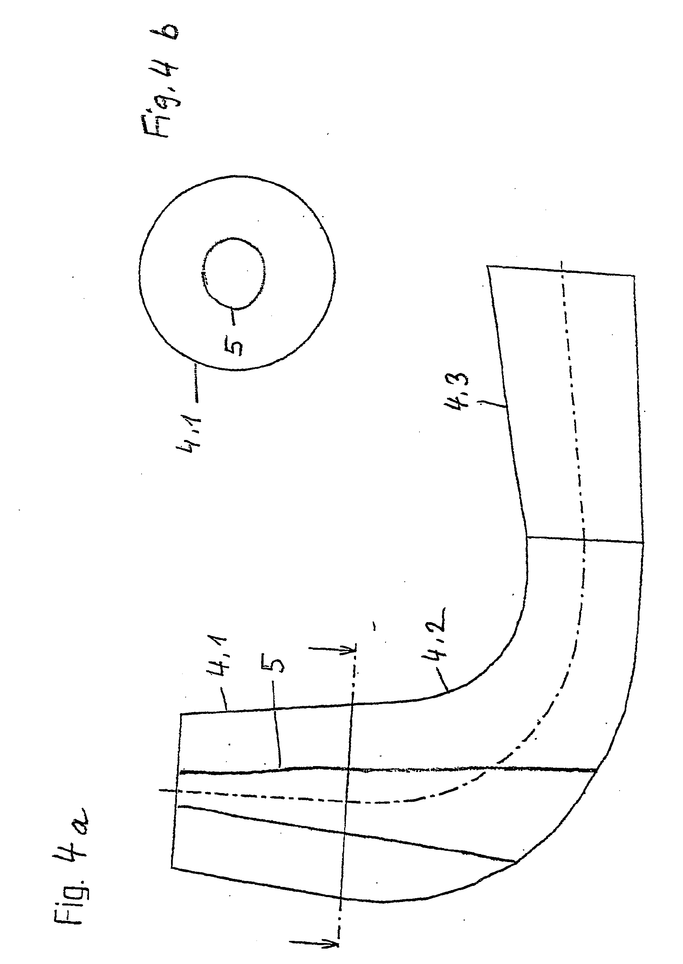

In Figur 4 ist die erfindungsgemäße Veränderung des Designs des Diffusors dargestellt. Dabei ist der Querschnitt nicht kreisförmig ausgebildet. Die Achse des Diffusors ist gegenüber der Laufradachse geneigt oder verschoben. Außerdem ist diese Achse gekrümmt. Die symmetriebrechenden Merkmale beschränken sich nur auf den Eintrittsbereich des Saugrohres. Dieser als Diffusor bezeichnete Abschnitt endet mit dem Übergang in den Krümmer, bei dem die Auslaufströmung von vertikaler in horizontaler Richtung umgelenkt wird.

Der dargestellte Saugrohrdiffusor ist einer Kaplanturbine zugeordnet. Von dessen Laufrad ist lediglich die Nabe 1.3 dargestellt. Unmittelbar an die Nabe 1.3 schließt sich wiederum ein erfindungsgemäßer Verdrängungskörper 5 an dessen stromaufwärtige Stirnfläche 5.1. Der Abstand kann kleiner als 1 mm sein. Er kann auch einige Millimeter betragen, beispielsweise 1 bis 5 mm. Auch 10 bis 20 mm sind denkbar.

Der Verdrängungskörper 5 ist durch Stäbe an der Wandung des Saugrohrdiffusors 4.1 fixiert. Man erkennt insgesamt drei Stäbe 6.1, 6.2, 6.3. Die Stäbe sind radial angeordnet. Der Stab 6.3 und ein dahinter liegender, hier nicht gezeigter Stab sind gegenüber den Stäben 6.1, 6.2 in Strömungsrichtung versetzt.

Bei dieser Ausführungsform läuft der Verdrängungskörper 5 nicht mit dem Laufrad um, sondern steht fest.

Wie man erkennt, ist der Verdrängungskörper kegelartig oder keulenartig gestaltet. Das heißt, sein Durchmesser erweitert sich in Strömungsrichtung. Siehe auch die Schnittansicht gemäß Figur 3b.

Der Verdrängungskörper könnte auch etwas anders gestaltet sein. Seine stromaufwärtige Stirnfläche 5.1 könnte sich nämlich ebenso gut an der Nabe 1.3 abstützen. Die Stirnfläche 5.1 und die Außenfläche der Nabe 1.3 würden somit ein Lagerflächenpaar bilden. Dies trägt zur Steifigkeit und zur Lagesicherung des Verdrängungskörpers 5 bei. Die Laufradlagerung sollte in diesem Falle etwas stärker bemessen sein.

Bei der Ausführungsform gemäß der Figuren 4a und 4b handelt es sich wiederum um einen gekrümmten Saugrohrdiffusor. Der erfindungsgemäße Verdrängungskörper 5 ist hierbei von großer Länge. Er erstreckt sich wiederum von der Nabe des hier nicht dargestellten Laufrades einer Turbine, beispielsweise einer Kaplanturbine, bis zur Wandung des Krümmers 4.2. Dort ist der Verdrängungskörper 5 fixiert. Eine weitere Fixierung wird im Allgemeinen notwendig sein, entweder durch Stäbe, wie die Stäbe 6.1, 6.2 und 6.3, oder aber durch eine Lagerung an der Nabe des Laufrades.

Ist der Verdrängungskörper einteilig mit der Nabe 1.3 des Laufrades 1 ausgebildet, so dass er mit dieser umläuft, so kann er dennoch am Saugrohr 4 gelagert sein. Die genannten Stäbe 6.1, 6.2, 6.3 könnten ihn beispielsweise rotierend lagern.

Auch bei der Ausführungsform gemäß der Figuren 4a und 4b ist eine solche rotierende Lagerung im Bereich des Krümmers 4.2 denkbar.

Das stromabwärtige Ende des Verdrängungskörpers 5 kann nach Art einer Granatenspitze gestaltet sein. Es kann auch gerundet sein.

## Patentansprüche

1. Wasser-Turbine oder -Pumpe oder -Pumpturbine mit einem Laufrad (1.1), das eine Vielzahl von Laufschaufeln sowie eine Nabe (1.3) aufweist;
1.2 mit einem Gehäuse, das einen Leitapparat zur Regulierung der Einströmung in das Laufrad (1.1) aufweist;
1.3 mit einem Saugrohr (4) zur Führung des aus dem Laufrad (1.1) ausströmenden Wassers, das einen Eintrittsdiffusor aufweist;
1.4 im Saugrohr (4) ist ein langgestreckter Verdrängungskörper (5) angeordnet;
1.5 das stromaufwärtige Ende des Verdrängungskörpers (5) befindet sich im Bereich der Nabe (1.3) des Laufrades (1).
1.6 **dadurch gekennzeichnet, dass** sich der Verdrängungskörper (5) in Strömungsrichtung erweitert

2. Turbine oder Pumpe nach Anspruch 1, **dadurch gekennzeichnet, dass** der Abstand zwischen der Nabe (1.3) des Laufrades (1) und dem stromaufwärtigen Ende (5.1) des Verdrängungskörpers zwischen 0,5 und 50 mm beträgt.

3. Turbine oder Pumpe nach Anspruch 1 oder 2, **dadurch gekennzeichnet, dass** der Verdrängungskörper (5) durch Stäbe (6.1, 6.2, 6.3) am Saugrohr (4) abgestützt ist.

4. Pumpe oder Turbine nach einem der Ansprüche 1 bis 3, **dadurch gekennzeichnet, dass** der Verdrängungskörper (5) an der Nabe (1.3) des Laufrades abgestützt ist.

5. Pumpe oder Turbine nach einem der Ansprüche 1 bis 4, **dadurch gekennzeichnet, dass** der Verdrängungskörper (5) mit der Nabe (1.3) des Laufrades (1) einteilig ist und mit diesem umläuft.

6. Turbine oder Pumpe nach einem der Ansprüche 1 bis 3, **dadurch gekennzeichnet, dass** das Saugrohr (4) geradlinig verläuft.

7. Pumpe oder Turbine nach einem der Ansprüche 1 bis 5, **dadurch gekennzeichnet, dass** das Saugrohr (4) gekrümmt ist.

## Claims

1. A water turbine, pump or pump turbine, comprising a blade wheel (1.1) which comprises a plurality of rotor blades and a hub (1.3);
1.2 with a housing which comprises a guide apparatus for regulating the inflow into the blade wheel (1.1);
1.3 with a suction pipe (4) for guiding the water flowing from the blade wheel (1.1), which pipe comprises an entrance diffuser;
1.4 an oblong displacer (5) is arranged in the suction pipe (4);
1.5 the upstream end of the displacer (5) is located in the region of the hub (1.3) of the blade wheel (1);
1.6 **characterized in that** the displacer (5) widens in the direction of flow.

2. A turbine or pump according to claim 1, **characterized in that** the distance between hub (1.3) of the blade wheel (1) and the upstream end (5.1) of the displacer is between 0.5 and 50 mm.

3. A turbine or pump according to claim 1 or 2, **characterized in that** the displacer (5) is supported by rods (6.1, 6.2, 6.3) on the suction pipe (4).

4. A pump or turbine according to one of the claims 1 to 3, **characterized in that** the displacer (5) rests on the hub (1.3) of the blade wheel.

5. A pump or turbine according to one of the claims 1 to 4, **characterized in that** the displacer (5) is integral with the hub (1.3) of the blade wheel (1) and revolves with the same.

6. A turbine or pump according to one of the claims 1 to 3, **characterized in that** the suction pipe (4) extends in a straight line.

7. A pump or turbine according to one of the claims 1 to 5, **characterized in that** the suction pipe (4) is bent.

## Revendications

1. Turbine, pompe ou pompe-turbine munie d'une roue à auges (1.1), comportant une multiplicité d'ailettes ainsi qu'un moyeu (1.3) ;
1.2 avec un boîtier qui comporte un appareil de guidage pour réguler le débit dans la roue à auges (1.1) ;
1.3 avec une conduite d'aspiration (4) pour la conduite de l'eau s'écoulant de la roue à auges, comportant un diffuseur d'entrée ;
1.4 dans la conduite d'aspiration (4) a été disposé un corps de déplacement (5) étiré en longueur,
1.5 l'extrémité en amont du courant du corps de déplacement (5) se trouve au niveau du moyeu (1.3) de la roue à auges (1) ;
1.6 **caractérisée en ce que** le corps de déplacement (5) s'élargit dans la direction du courant.

2. Turbine ou pompe selon la revendication 1, **caractérisée en ce que** la distance entre le moyeu (1.3) de la roue à auges (1) et l'extrémité en amont du courant du corps de déplacement est comprise entre 0,5 et 50 mm.

3. Turbine ou pompe selon la revendication 1 ou la revendication 2, **caractérisée en ce que** le corps de déplacement (5) s'appuie à la conduite d'aspiration (4) par les barres (6.1, 6.2, 6.3).

4. Turbine ou pompe selon l'une des revendications 1 à 3, **caractérisée en ce que** le corps de déplacement (5) est fixé au moyeu (1.3) de la roue à auges (1).

5. Turbine ou pompe selon l'une des revendications 1 à 3, **caractérisée en ce que** le corps de déplacement (5) forme une seule pièce avec le moyeu (1.3) de la roue à auges (1) et tourne avec celui-ci.

6. Turbine ou pompe selon l'une des revendications 1 à 3, **caractérisée en ce que** la conduite d'aspiration (4) est rectiligne.

7. Turbine ou pompe selon l'une des revendications 1 à 5, **caractérisée en ce que** la conduite d'aspiration (4) est recourbée.
